# EUROPEAN PATENT SPECIFICATION

(11) **EP 0 479 343 B1**
(45) Date of publication and mention of the grant of the patent: **13.08.1997**
(21) Application number: 91122362.6
(22) Date of filing: 09.03.1987
(51) Int. Cl.: B01J 37/00, B01J 38/72, B03B 4/00, B07B 13/02, C10G 45/02

(54) **Production of improved catalyst-type particles using density grading**
Herstellung von Katalysatorteilchen sortiert nach Dichte
Production de particules du type catalyseur classées en fonction de la densité

(30) Priority: 10.03.1986 US 837690
(43) Date of publication of application: 08.04.1992
(62) Divisional of application: 87902239.0
(73) Proprietor: CRI INTERNATIONAL, INC., Baltimore, MD 21209 (US)
(72) Inventor: Welch, Gary J., Baltimore, Maryland 21212 (US); Ellingham, Robert E., Tomonium, Maryland 21093 (US)
(74) Representative: Schulmeyer, Karl-Heinz, Dr.

(56) References cited:
- GB-A- 2 108 861
- US-A- 2 567 207
- US-A- 2 759 605
- OLIVER MANUFACTURING COMPANY,INC. Rocky Ford,Colorado Gravity separator operating instruction manual
- CARTER-DAY COMPANY BULLETIN NO. UM-8 Minneapolis,Minnesota Carter-day Uni-Flow Cylinder separator

## Description

### Field of the Invention

The invention relates to a process for treating a mixture of free flowing catalyst-type particles consisting essentially of a regular geometric shape in order to separate and isolate improved catalyst-type particles using density grading. More particularly, this invention relates to density grading of generally cylindrically-shaped catalyst-type particles, and to the regeneration, rejuvenation and manufacture of catalyst-type particles which have been subjected to density grading.

### Background of the Invention

Catalysts used in the conversion and refining of hydrocarbons become contaminated with carbonaceous deposits, known as "coke", as well as metallic deposits, such as nickel, vanadium, iron or silica which may be present in the hydrocarbon feed as organometallic compounds or as tramp impurities. The spent catalyst becomes inactive and must be withdrawn from the catalyst reactor, and passed to a regenerator where coke is burned off to regenerate the catalyst, which is returned for reuse in the reactor. In addition to contamination, continued use of the catalyst results in catalyst attrition, i.e. the generally cylindrical catalyst particles become reduced in length to an undesirable degree. The presence of such shortened catalyst particles in a fixed bed reactor causes plugging of the bed and undesirable pressure buildup resulting in reduced flow and eventual shutdown of the bed. Historically, the catalyst industry has utilized classical screening techniques to remove "dust" or "fines", i.e. very small broken or deformed catalyst particles, from the catalyst mass. However, use of a screen with a square aperture is limited by the diameter of the generally cylindrical catalyst particle or "pill". If the aperture of the screen is larger than the cross-sectional diameter of the pill, the screen cannot separate the catalyst pills on the basis of length. Screening can only be used to separate pills having a length-to-diameter ratio (L/D) less than one from pills having an L/D equal to or greater than one. Thus, a 12 mesh screen (square or slotted) having a 1,7 mm opening, which is either square or rectangular, will allow a 1/16 inch (1,6mm) diameter cylindrically shaped catalyst particle through the opening, whether the catalyst is 2 mm or 10 mm in length, as long as the catalyst enters the opening on end. Accordingly, in practice, the use of screening techniques is limited to removal of catalyst dust or fines in which the catalyst L/D is less than one.

Unfortunately, catalyst particles having an L/D greater than one can still be too short for usage in the reactor. Most frequently it is the particles with an L/D in the range of 1,0 to 2,0 that are undesirable and cause problems necessitating disposal of the entire catalyst batch containing such particles. Not only is such disposal costly and wasteful, in view of the great expense of catalysts, including those containing noble metals and the like, but, in addition, such disposal results in pollution and toxic waste disposal problems since many such catalysts contain toxic metals, such as cobalt, nickel, and vanadium.

The manufacturing process for shaped catalysts includes sizing and/or breaking procedures to produce a product of a desired particle length distribution. With the state of the art in screening and separation technology, it is frequently difficult if not impossible to obtain the desired particle length distribution, or if it is achieved, this commonly results in the rejection of desired particles along with those undesired because of the poor selectivity of the equipment or process. Major improvements can be obtained if particles can be selectively separated on a length basis if the length division point is such that the L/D ratio is greater than one.

Additionally, spent catalyst particle mixtures are "heterogeneous" in nature since the degree of feedstock-supplied metal contamination on each particle varies within the batch. Thus, a given batch of spent catalyst contains good catalyst particles and contaminated catalyst particles in varying degrees. However, since adequate methods are unavailable to separate the good particles from the more contaminated particles, the entire batch is often discarded.

In other cases a given lot of catalyst may consist of two or more similarly shaped and sized particles but different in composition and individual pellet density. This may commonly be, for example, mixtures of hydrotreating and hydrocracking catalysts or nickel-molybdenum and cobalt-molybdenum catalysts. Such mixtures may be spent catalyst removed from a processing reactor or fresh catalyst which may have been inadvertently mixed during the manufacture or a handling process. These mixtures have diminished value and are commonly discarded.

From US-A-2 567 207 a density grading process is already known as part of a regeneration procedure for the maintenance of catalytic activity in hydrocarbon conversion systems. According to this known density grading process a portion of fluent particles of solid hydrocarbon conversion catalyst graduated in size after regeneration is contacted with a flowing stream of cool oxygen-containing gas so as to heat said gas and so as to cool said portion of particles and to separate it into a relatively less catalytically active fraction comprising particles of said catalyst which are higher in apparent particle density and lower in catalytic activity than the catalyst in said system, and a relatively more catalytically active fraction whose average apparent particle density is lower than that of said portion. The mixture of particles are separated simultaneously into only two fractions. However, the selectivity achievable by this known process is not satisfactory in view of the yield and quality of the recovered catalytically active fraction.

### Summary of the Invention

The invention is based on the problem to provide a density grading process which is suitable to separate a mixture of free-flowing catalyst-type particles consisting essentially of a regular geometric shape and comprising relatively uncontaminated particles, lightly contaminated particles and heavily contaminated particles, with a higher degree of selectivity into the components than can be achieved by known processes of the same kind so that the reusable components can be recovered to a great extent and with a high purity and the component for disposal comprising the heavily contaminated particles can be remarkably reduced.

A successful solution of this problem has been achieved according to the invention by a density grading process as claimed in claim 1. Preferred embodiments are characterized in the subclaims 2 to 9.

In accordance with one aspect of the present invention an admixture of free flowing, metals contaminated, spent, similar, catalyst-type particles consisting essentially of a regular geometric shape, particularly of a generally cylindrical shape, all having substantially the same diameter, are density graded by a process which comprises feeding a heterogeneous mixture of catalyst particles comprising relatively uncontaminated catalyst particles, lightly contaminated catalyst particles and heavily contaminated catalyst particles, to a highly selective density classification zone in which said relatively uncontaminated particles and said lightly contaminated particles are suspended in a gaseous medium and the heavily contaminated particles contact a vibrating, upwardly sloping surface. In the density classification zone, the heavily contaminated catalyst particles are the most heavily laden with foreign metals and are thus the heaviest particles fed to the density classification zone. These heavily contaminated particles move upwardly along the vibrating surface and pass to an outlet where they are collected. Meanwhile, the lightly contaminated particles, which are the next heavist, are suspended in a gas just above the heavier particles, move over the heavier particles which being suspended, contact a separate, lower portion of the vibrating deck, and then are withdrawn and collected at a second outlet. The uncontaminated, lightest particles, are suspended and move over the lightly contaminated particles, then contact the lowest portion of the vibrating deck, and are then withdrawn and collected at a third outlet.

According to another aspect of the present invention, spent catalyst particles are density graded and regenerated to remove carbonaceous deposits.

According to still another aspect of the present invention, spent catalyst particles are density graded and then extracted with acid to remove metal contaminants.

According to further embodiment of the invention, spent catalyst particles are stripped to render said particles free-flowing, density graded and regenerated to remove carbon contaminants.

According to another aspect of the present invention, spent catalyst particles prior to the density grading are length graded.

According to still another aspect of the present invention, spent catalyst particles are regenerated, length graded and then density graded.

Surprisingly, it was discovered that the density grading method of the present invention provides separation of metals contaminated catalyst material from uncontaminated catalyst particles of similar size and shape to a degree unattainable by known methods.

### Brief Description of the Drawings

FIGS. 1 and 2 illustrate traditional screening techniques in accordance with the prior art.

FIG. 3 is a schematic diagram showing the process of the present invention.

FIG. 4 is top plan view of the density grading apparatus used in the process of the present invention.

### Description of the Preferred Embodiments

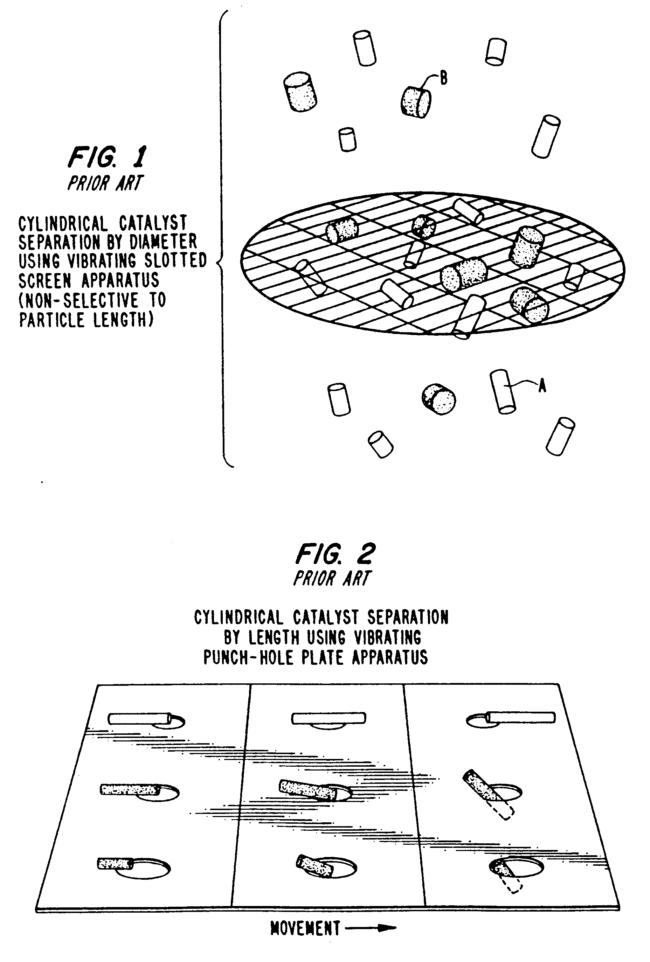

The limitations of a prior art slotted or rectangular screen are illustrated in FIG. 1 where the light pellets A have a diameter less than the narrow opening of the slotted screen. The dark pills B have a diameter greater than the narrow opening of the slotted screen. As can be seen from FIG. 1, any pill with a dimension less than the narrow opening can pass through. Thus, in this case, all light pills (with a diameter less than the narrow opening) or all dark pills with a length less than the narrow opening can pass through. FIG. 1 shows that the slotted screen separation is based on a particle's smallest dimension.

Another screening technique used to separate catalyst pills on a length basis employs vibrating "punched plates" as illustrated in FIG. 2 in accordance with the prior art. In this instance pills are axially aligned in the direction of movement and slide over the holes, and those pills with a length less than two times the hole diameter will "tip" over and pass through. The hole diameter must be greater than the pellet diameter so that this technique can only be used to separate at an L/D ratio greater than two. In practice this technique gives poor selectivity since the vibration of the apparatus required to move the pills across the plate causes many pills to bounce and simply fall through endwise, a problem similar to that experienced with square screens.

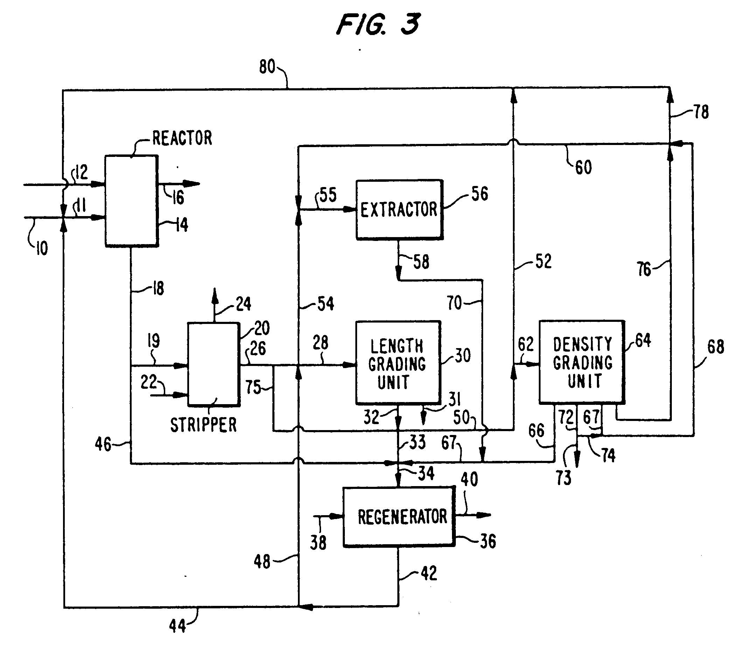

Referring now to FIG. 3 of the drawings which is in accordance with the present invention, fresh catalyst particles all having substantially the same diameter are supplied by means of lines 10 and 11 along with a hydrocarbon feedstock in line 12 to reactor 14 shown in block diagram form. The shaped catalyst-type particles of the present invention have a regular geometric shape, and are formed by extrusion or pelletizing. The catalyzed particles preferably have a generally cylindrical shape with a generally circular or polylobate cross section. The shaped catalyst-type particles of the present invention are to be distinguished from granular shaped particles which have an irregular shape. The preferred shaped catalyst particles treated by the process of the present invention have a cross-sectional diameter of from about 0,635 to about 25,4 mm (0,025 to about 1,0 inch) , preferably from about 0,7 to about 4,0 mm. The diameter referred to in connection with the particles of the present invention is the largest cross-sectional diameter. The expression "substantially the same diameter" as used in the present application means that the diameter of a group of particles to be separated does not vary more than 10 percent.

The process of the present invention is suitable for treatment of any "catalyst-type particle". As used in the present application, the term "catalyst-type particle" means catalysts, catalyst supports, and sorbents. The term "similar" catalyst-type particles means substantially, all of said particles in the mixture have substantially the same chemical composition, e.g., cobalt molybdate on alumina. The term "dissimilar" catalyst-type particle mixture means the mixture contains a significant portion of particles of more than one type, e.g., a mixture comprising cobalt molybdate on alumina particles and alumina per se particles. The catalyst-type particles treated in accordance with the present invention may comprise any of the conventional catalysts used in conversion or refining of hydrocarbons, such as hydrotreating catalysts which commonly contain active metals from the group cobalt, molybdenum, nickel, tungsten and titanium supported on shaped alumina or silica alumina; hydrocracking catalysts which commonly contain active metals such as nickel, molybdenum, tungsten, and palladium supported on shaped silica-alumina or molecular sieves; reforming catalysts which commonly contain platinum, palladium or platinum in combination with another transition or rare earth metal supported on shaped alumina. Catalyst supports or sorbents, for example, silica, alumina, silica-alumina or molecular sieves without promoter metals may also be treated in accordance with this invention. For the purposes of illustration the following description will be directed to nickel-molybdate on a refractory metal oxide support.

The hydrocarbon feedstock from line 12 is subjected to hydrotreating, for example, in reactor 14 under conventional hydrotreating conditions, and the hydrocarbon products are withdrawn from reactor 14 by means of line 16. Reactor 14 can be a fixed bed, ebullated bed, slurry or fluidized bed type of reactor. Under continued usage the catalyst is subject to attrition, and carbonaceous deposits accumulate on the catalyst. Also, metallic deposits from the hydrocarbon feedstock, such as nickel, vanadium, iron and silica deposit on the catalyst particles. Such attrition and fouling reduces the effectiveness of the catalyst mass and if permitted to continue will result in the shutdown of reactor 14. Thus, spent catalyst particles are withdrawn from reactor 14 by means of lines 18 and 19 to stripper 20 where the spent catalyst particles are deoiled so as to render them free flowing. In stripper 20 the oily spent catalyst particles may be contacted with an inert gas, such as nitrogen, introduced by means of line 22, while being heated to a temperature of from about 100° to about 500°C, to volatize aqueous or oily residue on the spent catalyst particles. Volatized hydrocarbon or water is withdrawn from stripper 20 by means of line 24. Alternatively, the spent catalyst particles can be stripped in reactor 14 to remove hydrocarbons and thereby eliminate the need for stripper 20. In that event the free flowing particles are passed directly to density grading or regeneration hereinafter described (by means not shown).

Free flowing catalyst particles are withdrawn from reactor 14 or stripper 20 and passed to density grading zone 64.

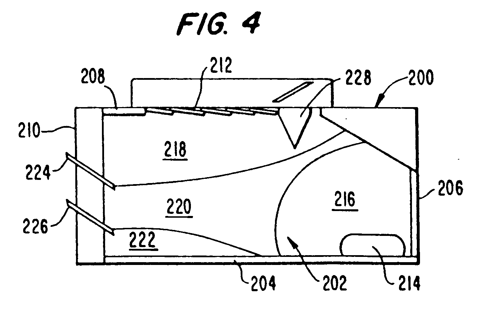

A preferred density grading system is shown in FIG. 4.

Figure 4 is a top plan view of a density separator for density grading catalytic particles. This device is particularly useful for stripped or regenerated 0,7-3,2 millimeter diameter catalyst from a residue conversion process. Some particles are more contaminated with nickel and vanadium than other particles.

Density separator 200 comprises a deck or base 202 surrounded by a plurality of vertically extending walls 204, 206, and 208. Wall 204 forms a banking rail. Wall 208 includes a plurality of cut out gates 212.

Deck 202 is air pervious. Means located below the deck, e.g., fans, direct a stream of air upwardly through the deck. A feed conveyer 214 is provided adjacent one corner of the deck. The deck slopes or is tilted from back to front and from side to side so that the feed conveyer 214 is suitably arranged at the lowest corner of the deck, as shown in Fig. 4.

Particles to be separated are fed onto deck 202 from above as a stream of air is forced upwardly through the deck and the deck is vibrated. As the particles are fed onto the deck, they are passed into a stratifying zone 216. In the stratifying zone, the deck vibration and the lifting action provided by the air stream combine to cause the particles to stratify into layers according to weight. The heavier layers remain on the bottom of the deck, while the lighter layers rise above the heavier layers.

After stratification of the particles into different weight sets in the stratification zone, the different sets are activated differently by the vibration of the deck. The deck vibration tends to push the heavier layers which are in contact with the deck towards its high side into a heavy particle zone 218. Simultaneously, the lighter particles at the top of the floating particle bed are spaced above the vibrating deck and thus, are not affected by the deck vibration. This causes the lighter particles to float downwardly to the low side of the deck into a lighter particle zone 222. Intermediate weight particles pass into a middle weight particle zone 220.

As the particles are conveyed downwardly along the sloping surface of the deck from the feed conveyer 214, to the discharge end of the deck at wall 210, the deck vibration gradually converts the vertically stratified particle layers into a horizontal separation. Complete separation is achieved at the discharge end of the deck at wall 210 with the heavier particles concentrated at the high side of the deck at adjacent wall 208, light materials at the low side of the deck at adjacent wall 204, and intermediate materials therebetween.

The conversion from vertical stratification to horizontal separation is achieved by vibration. The heavier particles contact the deck and are conveyed to the high side by vibration. The lighter particles being spaced from the deck and not subject to vibration and float downwardly to the low side of the deck under the force of gravity.

The areas 218, 220 and 222 are shown as being distinct in the representation of Figure 4. In practice, the separation between these three areas will not be so clearly defined.

The discharge end is separated by cutting or stream separation fingers 224 and 226 to separate the different discharges. A trap 228 prevents passage of heavy foreign objects into the separation areas 218, 220 and 222.

Apparatus which can be adapted for use in the method of the present invention is disclosed in U.S. Patent No. 2,759,605.

The apparatus of FIG. 4 can be used to separate mixtures of catalyst-type particles having substantially the same diameter but differing in pellet density, because of metals contamination (as in spent catalysts), or because the mixture comprises dissimilar catalyst particles, such as a mixture of nickel molybdate on alumina with cobalt-molybdate on alumina or a mixture of hydrotreating and hydrocracking catalyst particles.

Referring again to FIG. 3, density grading zone 64 produces a light catalyst fraction, which contains little or no heavy metal contamination, and this light fraction is passed by means of lines 66, 67 and 34 to regeneration zone 36 to remove carbonaceous deposits. The substantially carbon-free, light catalyst fraction can be recycled by means of lines 42, 44 and 11 to reactor 14. Alternatively, if the metals contaminates of the light fraction are two high to allow direct re-use through regeneration, they may be passed through the extraction zone 56 and regeneration zone 36 as described for the medium density fraction below.

A medium density catalyst fraction is withdrawn from density grading zone 64 by means of line 67 and passed by means of lines 68, 60 and 55 to extraction zone 56 for removal of heavy metals. Thereafter the rejuvenated catalyst fraction may be passed by means of lines 58, 70, 67 and 34 to regeneration zone 36 for removal of carbon. The catalyst particles are then returned to reactor 14 by means of lines 42, 44 and 11.

A heavily contaminated fraction is withdrawn from density grading zone 64 by means of line 72, and this fraction can be sent to disposal by means of line 73 or can be passed by means of lines 74, 68, 60 and 55 to acid extraction following the procedure used for the medium density fraction.

It is usually desirable to density grade the catalyst prior to regeneration,since the heavy metal impurities act like a catalyst for the oxidation reaction making control of regeneration temperature difficult. Also, density grading can be influenced by catalyst length often making it desirable to length grade the catalyst prior to density grading.

A suitable length grading system is described in European Patent No. 0274479 (European patent application No. 87902239.0).

In accordance with another embodiment of the present invention, spent catalyst from reactor 14 is passed by means of lines 18 and 19 to stripper 20 to provide free flowing particles which are withdrawn by means of line 26 and passed by lines 75, 33 and 34 to regenerator 36. Regenerated particles are withdrawn by means of line 42 and passed by lines 48 and 28 to length grading in unit 30 for removal of the undesired shorter particles which are sent to disposal by means of line 31. The desired, longer particles are passed by means of lines 32, 50 and 62 to density grading in unit 64 to produce three fractions, namely, a light density catalyst fraction, which contains little or no heavy metal contamination, a medium density catalyst fraction, which is lightly contaminated with metal. impurities, and a heavily metals-contaminated fraction. The light fraction can be recycled directly to reactor 14 by means of lines 76, 78, 80 and 11 or subjected to extraction in extractor 56 by means of lines 76,60 and 55. The medium density fraction can be passed by means of lines 67, 68, 60 and 55 to extractor 56, while the heavy fraction can be passed by means of line 72, 74, 68, 60 and 55 to extractor 56, or can be passed to disposal by means of line 73.

The following example demonstrates the high degree of density grading selectivity achievable by the density grading techniques of the present invention.

### Example

In order to demonstrate the high degree of selectivity available by the method of the present invention, an experiment was conducted with spent catalyst which had been stripped. The catalyst used has a diameter of 0,9 mm. The catalyst must be oil-free or regenerated before processing because it must be free flowing before subjected to density grading. The spent catalyst has on a fresh catalyst basis a density of approximately 640,74 kg/m³ (40 lbs./ft³), a surface area of about 200 m², and approximately 4% nickel and 8% molybdenum and is stripped and length graded to obtain a 1,5 - 3,5 mm length range material. It is advantageous to have particles of similar length in order to render density grading most effective.

Using the apparatus shown in Figure 4, the stripped material was divided into three fractions, heavy, medium and light comprising 27% heavy, 53% medium and 20% into the light fraction. The results of the density grading are shown in Table 1, below.

**Table 1**

| Catalyst | %Vol. | Uncalcined | | | | | Calcined | | |
|---|---|---|---|---|---|---|---|---|---|
| | | CBD | | C (wt%) | S (wt%) | SA (m²/g) | V (wt%) | Ni (wt%) | Mo (wt%) |
| | | (kg/m³) | (lbs/ft³) | | | | | | |
| Fresh | -- | 640,7 | 40 | 0 | 0 | 200 | 0 | 4 | 8 |
| Stripped | 100 | 1201,4 | 75 | 22 | 9,1 | -- | 10,0 | 5,3 | 5,6 |
| Heavy | 27 | 1281,5 | 80 | 20 | 10,6 | -- | 9,5 | 4,9 | 4,6 |
| Medium | 53 | 1217,4 | 76 | 21 | 9,8 | -- | 9,6 | 4,9 | 5,1 |
| Light | 20 | 1121,3 | 70 | 24 | 6,6 | -- | 6,4 | 6,5 | 7,6 |
| Regenerated | 100 | 1121,3 | 70 | 5,9 | 5,8 | 68 | 9,8 | 5,4 | 5,7 |
| Heavy | 47 | 1233,4 | 77 | 8,6 | 6,5 | 44 | 12,6 | 6,7 | 5,3 |
| Medium | 30 | 1137,3 | 71 | 2,9 | 5,4 | 73 | 10,6 | 6,4 | 5,8 |
| Light | 23 | 929,1 | 58 | 1,0 | 4,5 | 152 | 6,6 | 6,2 | 6,9 |
| Heavy | 13 | 1089,3 | 68 | 1,3 | 5,1 | 81 | 10,0 | 6,4 | 6,2 |
| Medium | 39 | 993,1 | 62 | 0,8 | 4,9 | 104 | 7,8 | 6,1 | 7,3 |
| Light | 48 | 816,9 | 51 | 0,7 | 3,4 | 189 | 3,6 | 5,6 | 8,8 |

As seen in Table 1, the heavy fraction has a density of 1201,4 kg/m³ (80 lbs./ft³), the medium 1217,4 kg/m³ (76 lbs./ft³) and the light 1121,3 kg/m³ (70 lbs./ft³). The carbon is fairly homogeneous throughout these samples. The sulfur level follows that of contaminated metals to a large degree, in particular, vanadium, and the change from 10,6 to 9,8 to 6,6 sulphur is a significant change. The light fraction is clearly low on vanadium, demonstrating that 20% of the total starting material has been isolated and has a much lower vanadium level than the composition of the starting material, which has about 10% vanadium on it. There is nickel in the virgin catalyst, as well as nickel laydown as a contaminant on the catalyst. The increasing molybdenum values show that the lighter fractions are less contaminated. As the particles become isolated purer and purer in the separation process, they approach the 8% molybdenum of the fresh catalyst. The heavy fraction is down to 4,6% molybdenum, the medium 5,1%, the light fraction is 7,6% molybdenum almost up to fresh catalyst levels.

Referring to the regenerated catalyst, this is a medium length fraction from a length grading having an average length of 2,3 mm, as described in Example 1 of the European patent No. 0274479 (European patent application No. 87902239.0). This fraction was divided into three fractions; a heavy, a medium and a light fraction. As seen from the stripped materials in Table 1, the starting catalyst has about 20-22% carbon. The regenerated sample only has 5,9% carbon. A fully regenerated catalyst would have about 1% or less. Very heavily metal contaminated particles are extremely difficult to regenerate, and when dealing with this heterogeneous mixture of materials is extremely difficult to get down to traditional regeneration levels of 1% carbon. Thus, this sample is actually only partially regenerated to 5,9% carbon. The sulphur on the material is 5,8% and the surface area is only 68 m²/g, which is dramatically below fresh catalyst level of 200 m²/g. The regenerated material has about 9,8% vanadium, 5,4% nickel, and 5,7% molybdenum.

Using the apparatus of Figure 4, the regenerated material was divided into three fractions: 47% heavy, 30% medium, and 23% light. There is a dramatic difference in the density of the three materials of 1233, 1137 and 929 kg/m³ (77, 71 and 58 lbs./ft³) for the three resulting fractions. The success in the separation is further illustrated by the carbon numbers, since heavily contaminated particles regenerate poorly, and this is supported by the 8,6% carbon level on the heavy fraction material. However, the medium fraction is down to 2,9% carbon and the light fraction is down to 1% carbon, which is a fully regenerated catalyst. The sulphur numbers also go down, proportionally in the direction of lighter fractions and this is a reflection of the vanadium on the catalyst. The sur-face areas achieved are 44, 73, and 152 m²/g for the heavy, medium and light fractions, respectively. Thus the light frac-tion that was isolated is close to fresh catalyst surface area (152 vs. 200 m²/g). The amount of vanadium further illustrates success in the separation, i.e., 12,6% vanadium in the heavy fraction, 10,6% in the medium, and down to 6,6% in the light fraction, which is a dramatic and surprising separation.

To further illustrate the benefits of density grading to obtain catalyst fractions with activities suitable for re-use, desulfurization activity tests were measured on the three density graded fractions of regenerated catalyst. Before testing the medium and heavy fractions were first heated at 510°C (950°F) to remove the residual carbon. The activities of the regenerated graded samples were compared to those of a fresh sample of catalyst and a sample of regenerated but ungraded spent catalyst. All were used to process a gas oil feedstock in a downflow, fixed-bed test unit at 1,5 LHSV, 49 bar (700 psig), 330°C (625°F) and 178 m³/m³ (1000 SCF/B) of treat gas (hydrogen).

**Table 2**

| Catalyst | Product Sulfur (wt%) |
|---|---|
| Fresh | 0,42 |
| Light Fraction | 0,46 |
| Medium Fraction | 0,71 |
| Heavy Fraction | 0,74 |
| Regenerated-Ungraded | 0,77 |

Lower product sulfur values are indicative of a more active and more desirable catalyst. As shown in Table 2, the light graded fraction has a desulfurization activity very near that of fresh catalyst and far superior to the medium and heavy fraction. In this example, the light fraction could be beneficially reused in most hydroprocessing applications. The medium and heavy as well as the ungraded regenerated catalysts have activities too low for re-use. They would have to go to disposal or go through a rejuvenation process to be reused. As this example demonstrates, through the use of density grading we are able to isolate a re-usable fraction (light) of catalyst from a mixture (ungraded) which is not re-usable in and of itself.

To further illustrate the process and show the advantages of a staged or recycle operation, the light material, which represents 23% of the total starting material, was density graded into three fractions; a heavy, a medium and a light fraction, as seen in Table 1. The resulting fractions, 13% heavy, 39% medium, and 48% light. The densities show a dramatic difference from one fraction to another, with the light fraction (816,9 kg/m³ ≡ 51 lbs./ft³) approaching virgin material. The carbon numbers are 1,3 weight-% in the heavy fraction, 0,8 weight-% medium and 0,7 weight-% in the light, which indicates more and more highly regenerated catalyst particles in the lighter or purer fractions. Sulphur is down to 3,4% in the light fractions as compared with 4,9% and 5,1% in the heavier fractions. The surface area of the light material is 189 m²/g. This is extremely close to virgin catalyst (200 m²/g). The vanadium in the heavy fraction is 10%, the medium is 7,8%, and the light is 3,6%, while the molybdenum is 6,2% in the heavy, 7,3% in the medium, and the light fraction at 8,8%, which is equivalent to the molybdenum of virgin catalyst.

## Claims

1. A process for treating a mixture of free flowing catalyst-type particles consisting essentially of a regular geometric shape, particularly of a generally cylindrical shape having substantially the same diameter, said mixture comprising relatively uncontaminated particles, lightly contaminated particles and heavily contaminated particles the contaminations being substantially of carbonaceous and/or metallic deposits, comprising the steps of:
a)feeding said mixture of catalyst-type particles at the lowest corner of a density grading zone consisting of a density separator (200) which comprises a deck or base (202) which is air pervious, vibrated and tilted from back to front and from side to side and surrounded by a plurality of vertically extending walls (204, 206, 208) and which is divided into a stratifying zone (216), a heavy particle zone (218), a middle weight particle zone (220) and a lighter particle zone (222);
b)suspending said mixture of particles fed onto the deck (202) in a stream of gas which is forced upwardly through the deck (202), and passing the particles into the stratifying zone (216) where they are caused to stratify into layers according to weight, so that said heavily contaminated particles remain on the bottom of the deck (202), while said relatively uncontaminated and lightly contaminated particles rise in said stream of gas above said heavily contaminated particles, said heavily contaminated particles caused to move upwardly along an inclined, vibrating surface of the deck (202) towards its high side into the heavy particle zone (218) and thereafter being collected at a first outlet, said lightly contaminated particles float downwardly contacting the middle weight particle zone (220), which is a lower portion of said vibrating surface of the deck (202) and being collected at a second outlet, and said relatively uncontaminated particles float downwardly contacting the lighter particle zone (222), which is a portion of said vibrating surface of the deck (202) below that contacted by said lightly contaminated particles, and
c)withdrawing said relatively uncontaminated particles from a third outlet.

2. A process as defined in claim 1 wherein said relatively uncontaminated catalyst-type particles are contacted with oxygen under regeneration conditions.

3. A process as defined in claim 1 or 2 wherein said lightly contaminated catalyst-type particles are contacted with acid in an extraction zone to remove foreign metals.

4. A process as defined in claim 1 wherein said catalyst-type particles comprise dissimilar spent catalyst-type particles.

5. A process as defined in claim 4 wherein said catalyst-type particles comprise a mixture of first catalyst-type particles and second catalyst-type particles, said first catalyst-type particles having a greater density than said second catalyst-type particles, suspending said second catalyst-type particles in a gas above said first catalyst-type particles, said first catalyst-type particles caused to move upwardly along an inclined vibrating surface and thereafter being collected at a first outlet, said second catalyst-type particles contacting a portion of said vibrating surface below that contacted by said first catalyst-type particles, and withdrawing said second catalyst-type particles from a second outlet.

6. A process as defined in claim 5 wherein said first catalyst-type particles comprise a supported catalyst and said second catalyst-type particles comprise the support of said first catalyst-type particles.

7. A process as defined in any of the foregoing claims wherein said particles consist of a mixture of spent hydrotreating catalyst particles supported on a refractory metal oxide support and having carbonaceous and metallic deposits, said process comprises
passing said spent catalyst particles to a stripping zone in which volatilizable hydrocarbons are stripped from said particles to render said particles free-flowing;
passing said free-flowing catalyst particles to a density grading zone in which lightly metals contaminated catalyst particles are separated from more heavily metals contaminated catalyst particles, said more heavily catalyst particles being collected at a first density grading zone outlet, whereas said lightly contaminated catalyst particles are collected at a second grading zone outlet;
passing said lightly contaminated catalyst particles to a regeneration zone in which carbonaceous deposits are removed from said lightly contaminated catalyst particles by oxidation in the presence of an oxygen-containing gas to produce regenerated catalyst particles which are lightly contaminated with metals;
and returning said lightly contaminated regenerated catalyst particles to a hydrotreating zone for reuse.

8. A process as defined in any one of the foregoing claims in which free-flowing catalyst particles prior to the density grading are passed to a length grading zone;
said length grading zone comprising a rotating cylindrical drum having inwardly opening indentations in a cylindrical wall thereof, the indentations having a transverse diameter L₁ in the range of 0.8 to 24 mm;
rotating said drum about a longitudinal axis thereof at a speed sufficient to entrap in the indentations and convey catalyst particles having a length below L₁ and an L/D greater than one upwardly to a height permitting the catalyst particles to fall into a fixed upwardly opening trough, while retaining catalyst particles having a length above L₁ and an L/D greater than one in a bottom portion of said drum; conveying the catalyst particles in the trough out a first outlet;
whereby at least about 80 per cent of said catalyst particles with a length less than L₁ are separated from the desired catalyst particles which have a length greater than L₁; said particles having a length greater than L₁ comprising lightly contaminated particles and more heavily contaminated catalyst particles; and
passing said catalyst particles from the bottom of said drum to said density grading zone.

9. A process as defined in claim 8, wherein said particles consist of a spent catalyst-type particle mixture which prior to passing to the length grading zone is passed to a regeneration zone to remove carbon deposits from the surface of the particles.

## Patentansprüche

1. Verfahren zur Behandlung einer Mischung von frei fließenden Katalysator-Formteilchen, die eine im wesentlichen regulärgeometrische Form, insbesondere eine im allgemeinen zylindrische Form, mit im wesentlichen dem gleichen Durchmesser aufweisen, wobei sich die Mischung aus relativ unkontaminierten Teilchen, leicht kontaminierten Teilchen und stark kontaminierten Teilchen zusammensetzt und die Kontaminationen im wesentlichen kohlenstoffhaltige und/oder metallische Ablagerungen sind, bestehend aus den folgenden Verfahrensschritten:
a) Einführen der Katalysator-Formteilchen-Mischung in die niedrigste Ecke einer Zone zur Dichtesortierung der Teilchen, bestehend aus einem Dichte-Separator (200), der ein Deck oder einen Boden (202) umfaßt, wobei das Deck (202) luftdurchlässig ist, vibriert und von hinten nach vorn und von einer Seite zur anderen geneigt und von einer Vielzahl von vertikal sich erstreckenden Wänden (204, 206, 208) umgeben ist und in eine Schichtungszone (216), eine Zone mit den schweren Teilchen (218), eine Zone mit den mittelschweren Teilchen (220) und eine Zone mit den leichteren Teilchen (222) aufgeteilt ist;
b) Suspendieren der auf dem Deck (202) eingeführten Teilchenmischung in einem Gasstrom, der gezwungen wird, aufwärts durch das Deck (202) zu strömen, und Einleiten der Teilchen in die Schichtungszone (216), wo sie entsprechend ihrem Gewicht zur Schichtenbildung veranlaßt werden, so daß die stark kontaminierten Teilchen auf dem Boden des Decks (202) bleiben, während die relativ unkontaminierten und die leicht kontaminierten Teilchen in dem Gasstrom über die stark kontaminierten Teilchen aufsteigen, wobei die stark kontaminierten Teilchen veranlaßt werden, sich aufwärts entlang einer ansteigenden vibrierenden Oberfläche des Decks (202) in Richtung auf seine hohe Seite in die Zone der schweren Teilchen (218) zu bewegen, worauf sie in einem ersten Auslaß gesammelt werden, und wobei die leicht kontaminierten Teilchen abwärts befördert werden, mit der Zone der mittelschweren Teilchen (220), die ein niedrigerer Teil der vibrierenden Oberfläche des Decks (202) ist, in Kontakt kommen und in einem zweiten Auslaß gesammelt werden, und wobei die relativ unkontaminierten Teilchen abwärts befördert werden und mit der Zone der leichteren Teilchen (222), die ein Teil der vibrierenden Oberfläche des Decks (202) unterhalb der mit den leicht kontaminierten Teilchen in Berührung kommenden Decksoberfläche ist, in Kontakt kommen, und
c) Entfernen der relativ unkontaminierten Teilchen durch einen dritten Auslaß.

2. Verfahren nach Anspruch 1, dadurch gekennzeichnet, daß die relativ unkontaminierten Katalysator-Formteilchen unter Regenerierungsbedingungen mit Sauerstoff in Kontakt gebracht werden.

3. Verfahren nach Anspruch 1 oder 2, dadurch gekennzeichnet, daß die leicht kontaminierten Katalysator-Formteilchen zur Entfernung von Fremdmetallen in einer Extraktionszone mit Säure in Kontakt gebracht werden.

4. Verfahren nach Anspruch 1, dadurch gekennzeichnet, daß die Katalysator-Formteilchen aus ungleichartigen verbrauchten Katalysatorteilchen bestehen.

5. Verfahren nach Anspruch 4, dadurch gekennzeichnet, daß die Katalysator-Formteilchen aus einer Mischung aus ersten und zweiten Katalysator-Formteilchen bestehen, wobei die ersten Katalysator-Formteilchen eine höhere Dichte als die zweiten Katalysator-Formteilchen haben, die zweiten Katalysator-Formteilchen in einem Gas oberhalb der ersten Katalysator-Formteilchen suspendiert werden und die ersten Katalysator-Formteilchen veranlaßt werden, sich aufwärts entlang einer ansteigenden vibrierenden Oberfläche zu bewegen, worauf sie in einem ersten Auslaß gesammelt werden, während die zweiten Katalysator-Formteilchen mit einem Teil der vibrierenden Oberfläche in Berührung kommen, die unterhalb der Oberfläche liegt, mit der die ersten Katalysator-Formteilchen in Kontakt sind, worauf die zweiten Katalysator-Formteil-chen durch einen zweiten Auslaß abgezogen werden.

6. Verfahren nach Anspruch 5, dadurch gekennzeichnet, daß die ersten Katalysator-Formteilchen einen Katalysator auf Trägermaterial und die zweiten Katalysator-Formteilchen das Trägermaterial der ersten Katalysator-Formteilchen enthalten.

7. Verfahren nach einem der vorhergehenden Ansprüche, dadurch gekennzeichnet, daß die Teilchen aus einer Mischung von verbrauchten, aus einem Hydrotreating-Verfahren stammenden Katalysatorteilchen auf einem wärmebeständigen Metalloxid-Träger mit kohlenstoffhaltigen und metallischen Ablagerungen bestehen, wobei das Verfahren umfaßt:
Einführen der verbrauchten Katalysatorteilchen in eine Stripping-Zone, in der die verflüchtigbaren Kohlenwasserstoffe aus den Teilchen abgetrieben werden, um diese frei fließend zu machen;
Weiterleiten der frei fließenden Katalysatorteilchen in eine Zone zum Sortieren nach der Dichte, in der mit Metallen leicht kontaminierte Katalysatorteilchen von mit Metallen stärker kontaminierten Katalysatorteilchen getrennt werden, wobei die schwereren Katalysatorteilchen in einem ersten Auslaß der Zone zur Dichtesortierung und die leicht kontaminierten Katalysatorteilchen in einem zweiten Auslaß der Zone zur Dichtesortierung gesammelt werden;
Weiterleiten der leicht kontaminierten Katalysatorteilchen in eine Regenerierungszone, in der von den leicht kontaminierten Katalysatorteilchen durch Oxidation in Gegenwart eines sauerstoffhaltigen Gases kohlenstoffhaltige Ablagerungen entfernt werden, wobei regenerierte Katalysatorteilchen erhalten werden, die leicht mit Metallen kontaminiert sind; und
Rückführen der leicht kontaminierten regenerierten Katalysatorteilchen in eine Wasserstoffbehandlungszone ("hydro-treating zone") zur Wiederverwendung.

8. Verfahren nach einem der vorhergehenden Ansprüche, dadurch gekennzeichnet, daß die frei fließenden Katalysatorteilchen vor der Dichtesortierung in eine Zone zur Längensortierung geleitet werden, die aus einer rotierenden Zylindertrommel mit nach innen offenen Vertiefungen in einer zylindrischen Wand besteht, wobei die Vertiefungen einen transversalen Durchmesser L₁ im Bereich von 0,8 bis 24 mm aufweisen;
Rotieren der Trommel um ihre Längsachse mit einer Geschwindigkeit, die ausreicht, um Katalysatorteilchen mit einer Länge kleiner als L₁ und einem L/D-Wert größer als 1 in den Vertiefungen einzufangen und aufwärts bis zu einer Höhe zu befördern, die es den Katalysatorteilchen ermöglicht, in einen ortsfesten, oben offenen Trog zu fallen, während Katalysatorteilchen mit einer Länge größer als L₁ und einem L/D-Wert größer als 1 in einem Bodenteil der Trommel zurückbleiben; Befördern der in dem Trog befindlichen Katalysatorteilchen durch einen ersten Auslaß;
wobei wenigstens etwa 80% der Katalysatorteilchen mit einer Länge kleiner als L₁ von den gewünschten Katalysatorteilchen, die eine Länge größer als L₁ haben, abgetrennt werden; und wobei die Teilchen mit einer Länge größer als L₁ leicht kontaminierte und schwerer kontaminierte Katalysatorteilchen aufweisen; und
Einleiten der Katalysatorteilchen vom Boden der Trommel in die Zone zur Dichtesortierung.

9. Verfahren nach Anspruch 8, dadurch gekennzeichnet, daß die Teilchen aus einer Mischung von verbrauchten Katalysator-Formteilchen bestehen, die vor dem Einführen in die Zone zur Längensortierung in eine Regenerierungszone geleitet werden, um Kohlenstoffablagerungen auf der Oberfläche der Teilchen zu entfernen.

## Revendications

1. Un procédé de traitement d'un mélange de particules de type de catalyseurs à écoulement libre présentant essentiellement une forme géométrique régulière, notamment une forme généralement de cylindres ayant pratiquement le même diamètre, ledit mélange comprenant des particules relativement non contaminées, des particules légèrement contaminées et des particules fortement contaminées, ces contaminations étant substantiellement formées de dépôts carbonés et/ou métalliques, ce procédé comprenant les étapes suivantes:
a) introduction dudit mélange de particules de type de catalytiseur dans le coin le plus bas d'une zone par triage de densité comprenant un séparateur de densité (200) qui comporte un couvercle ou base (202) qui est perméable à l'air, qui est vibré et secoué de l'arrière à l'avant et d'un côté à l'autre et entouré d'une pluralité de parois disposées verticalement (204, 206, 208) et qui est divisé en une zone de stratification (216), une zone de particules de masse élevée (218), une zone de particules de masse intermédiaire (220) et une zone de particules légères (222);
b) mises en suspension dudit mélange de particules introduites sur le couvercle (202) dans un courant de gaz qui est forcé vers le haut au travers du couvercle (202) et à faire passer les particules dans la zone de stratification (216) où elles sont amenées à se stratifier en couches selon leur masse de sorte que les particules fortement contaminées restent sur le fond du couvercle (202) alors que les particules relativement non contaminées et les particules légèrement contaminées s'élèvent, dans ledit courant de gaz, au dessus des particules fortement contaminées, lesdites particules fortement contaminées étant amenées à se déplacer dans un sens ascendant, selon une surface vibrante inclinée du couvercle (202) vers la partie supérieure dans la zone des particules de masse élevée (218), et ensuite étant recueillies à une première sortie, lesdites particules légèrement contaminées s'écoulant vers le bas en contact avec la zone de particules de masse intermédiaire (220), qui est une portion inférieure de ladite surface inférieure du couvercle (202) et étant recueillies à une seconde sortie, et les particules relativement non contaminées s'écoulant vers le bas, en contact de la zone de particules légères, qui est une portion de ladite surface vibrante du couvercle (202) en dessous de celle qui est en contact avec lesdites particules légèrement contaminées, et
c) à retirer lesdites particules relativement non contaminées par une troisième sortie.

2. Un procédé selon la revendication 1, dans lequel lesdites particules de type de catalyseur relativement non contaminées sont mises en contact avec de l'oxygène dans des conditions de régénération.

3. Un procédé selon la revendication 1 ou 2, dans lequel lesdites particules de type de catalyseur légèrement contaminées sont mises en contact avec de l'acide dans une zone d'extraction afin d'éliminer les métaux étrangers.

4. Un procédé selon la revendication 1, dans lequel lesdites particules de type de catalyseur comprennent des particules de type de catalyseur épuisées dissemblables.

5. Un procédé selon la revendication 4, dans lequel lesdites particules de catalyseur comprennent un mélange de particules d'un premier type de catalyseur et de particules d'un second type de catalyseur, lesdites particules du premier type de catalyseur ayant une densité plus élevée que lesdites particules du second type de catalyseur, en mettant en suspension lesdites particules du second type de catalyseur dans un gaz au-dessus des particules dudit premier type de catalyseur, lesdites particules du premier type de catalyseur étant entraînées en mouvement vers le haut le long d'une surface vibrante inclinée et ensuite étant collectées à une première sortie, lesdites particules de second type de catalyseur étant en contact avec une portion de ladite surface vibrante en dessous de celles en contact avec les particules de premier type de catalyseur, et en retirant lesdites particules de second type de catalyseur par une seconde sortie.

6. Un procédé selon la revendication 5, dans lequel lesdites particules de premier type de catalyseur comprennent un catalyseur supporté et lesdites particules de second type de catalyseur comprennent le support desdites particules de premier type de catalyseur.

7. Un procédé selon l'une quelconque des revendications précédentes dans lequel lesdites particules consistent en un mélange de particules de catalyseur d'hydrotraitement épuisées supportées sur un support d'oxyde de métal réfractaire et ayant des dépôts carbonés et métalliques, ledit procédé comprenant:
le passage desdites particules de catalyseur épuisées dans une zone d'entraînement dans laquelle les hydrocarbures volatisables sont éliminés desdites particules afin de rendre fluide lesdites particules;
le passage desdites particules fluides de catalyseur dans une zone de triage par densité dans laquelle les particules de catalyseur légèrement contaminées par des métaux sont séparées des particules de catalyseur fortement contaminées par des métaux, lesdites particules de catalyseur plus fortement contaminées étant recueillies à la première sortie de la zone de triage par densité tandis que lesdites particules de catalyseur légèrement contaminées sont recueillies à la seconde sortie de la zone de triage par densité:
le passage desdites particules de catalyseur légèrement contaminées dans une zone de régénération dans laquelle on élimine les dépôts carbonés desdites particules de catalyseur légèrement contaminées par oxydation en présence d'un gaz contenant de l'oxygène, pour obtenir des particules de catalyseur régénérées qui sont légèrement contaminées de métaux;
et recyclage desdites particules de catalyseur régénérées légèrement contaminées dans la zone d'hydrotraitement pour réutilisation.

8. Un procédé selon une quelconque des revendications précédentes dans lequel les particules de catalyseur fluide avant d'être soumises au triage par densité, passent dans une zone de triage par longueur; ladite zone de triage par longueur comprenant un tambour cylindrique tournant comportant des entailles ouvertes vers l'intérieur dans sa paroi cylindrique, les entailles ayant un diamètre transversal L₁ de 0,8 à 24 mm;
ledit tambour étant mis en rotation autour de son axe longitudinal à une vitesse suffisante pour piéger dans les entailles et entraîner des particules de catalyseur ayant une longueur inférieure à L₁ et un L/D supérieur à 1 vers le haut à une hauteur permettant aux particules de catalyseur de tomber dans une auge fixe ayant son ouverture tournée vers le haut, tout en retenant les particules de catalyseur ayant une longueur supérieure à L₁ et un L/D supérieur à 1 dans la partie inférieure dudit tambour; les particules de catalyseur dans l'auge étant entraînée par une première sortie;
ce qui permet de séparer au moins 80% environ desdites particules de catalyseur, ayant une longueur inférieure à L₁, des particules de catalyseur désirées ayant une longueur supérieure à L₁; lesdites particules ayant une longueur supérieure à L₁ comprenant des particules légèrement contaminées et des particules de catalyseur plus fortement contaminées et on fait passer lesdites particules de catalyseur du fond dudit tambour dans ladite zone de triage par densité.

9. Un procédé selon la revendication 8, dans lequel lesdites particules consistent en un mélange de particules de type catalyseur usé qui, avant de passer dans la zone de triage par longueur, passe dans une zone de régénération pour éliminer les dépôts de carbone de la surface des particules.
